# EUROPEAN PATENT SPECIFICATION

(11) **EP 3 168 457 B1**
(45) Date of publication and mention of the grant of the patent: **16.06.2021**
(21) Application number: 15382552.6
(22) Date of filing: 10.11.2015
(51) Int. Cl.: F03D 1/06

(54) **WIND TURBINE WITH BLADES WITH A CONING ANGLE**
WINDTURBINE MIT ROTORBLÄTTERN MIT EINEM KEILFÖRMIGEN WINKEL
ÉOLIENNE AVEC PALES AVEC UN ANGLE DE CONICITÉ

(43) Date of publication of application: 17.05.2017
(73) Proprietor: Nordex Energy Spain, S.A., 31395 Barasoain Navarra (ES)
(72) Inventor: Nuñez Polo, Miguel, 31621 Sarriguren (NAVARRA) (ES); García Sayes, José Miguel, 31621 Sarriguren (NAVARRA) (ES); Arlabán Gabeiras, Teresa, 31621 Sarriguren (NAVARRA) (ES)
(74) Representative: Pons

(56) References cited:
- EP-A1- 2 679 805
- EP-A1- 2 886 858
- US-A1- 2010 290 912
- US-A1- 2011 020 131
- US-A1- 2012 213 638

## Description

### OBJECT OF THE INVENTION

The present invention may be classified within the field of wind energy. More specifically, the object of the invention relates to a wind turbine with blades with a coning angle, said wind turbine presenting a configuration providing a coning angle in a more flexible and economical manner than the coning angle solutions envisaged in the current state of the art.

### BACKGROUND OF THE INVENTION

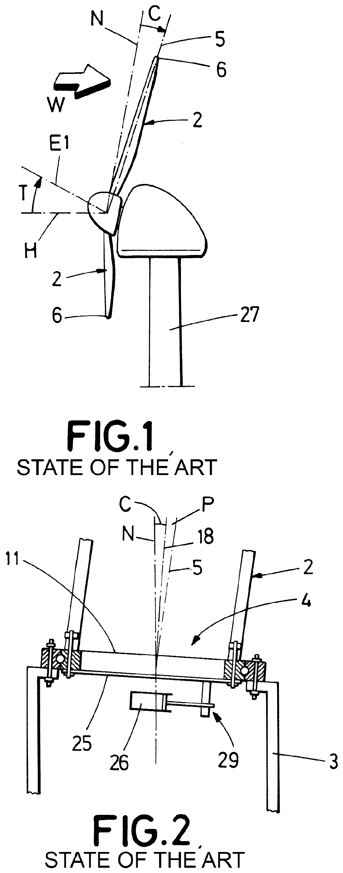

As shown in figure 1, corresponding to the state of the art, wind turbines with upwind rotors, also known in the sector as *upwind wind turbines,* as when in operation they face with the rotor towards the wind (W), usually feature an angle of inclination (T), also known in the sector as *tilt* angle, and an angle of conicity (C), known in the sector as the coning angle; both of these to prevent the blades (2) from interfering with the tower (27) due to the bending caused in said blades by the thrust of the wind (W).

The tilt angle (T) is defined as the angle formed by the axis of the rotor (E1) with a horizontal plane (H), while the coning angle is defined as the angle existing between a plane (N) perpendicular to the axis of the rotor (E1) and the longitudinal axis (5) of the blade (2).

In the state of the art, the coning angle is obtained by creating an angle (C) between a plane (N) perpendicular to the axis (E1) of the rotor and the axis (18) of the blade (2) bearing (4), also known as the pitch bearing (4).

Furthermore, as portrayed in figure 2, also corresponding to the state of the art, wind turbines with large rotors comprise an additional coning angle (P), also known as *pre-coning angle,* defined as the angle formed between the axis of the blade (2) bearing (18) and the longitudinal axis (5) of the blade (2).

The two fundamental advantages derived from the inclusion of an additional coning angle (P) are that, on the one hand, the separation between the tip (6) of the blade and the tower (27) increases, making interference between the two of them more difficult, and on the other hand, the centres of action of the forces generating a moment with regard to the axis (18) of the blade (2) bearing (4) get closer to said axis (18) of the blade (2) bearing (4), so that the moment is reduced and consequently the torque necessary for changing the pitch of the blade (2) is also reduced.

The PCT application by VESTAS, published as WO2013091635(A1), describes a wind turbine, the root of whose blades is bevelled, and each of whose blades is linked to its corresponding bearing by bolts which traverse the bearing and are housed in holes drilled in the blade, starting at the root. The holes are parallel to the turning axis of the bearing, entailing that they are not parallel to the longitudinal axis of the blade, giving rise to the fact that the bolts are not centred along the wall of the blade, causing an unequal distribution of stresses at the root of the blade.

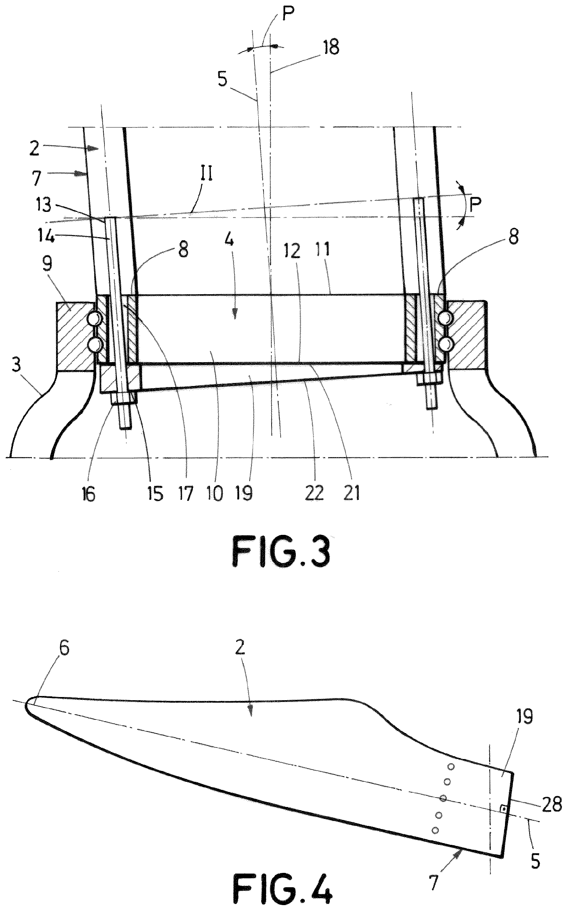

Conversely, GENERAL ELECTRIC's European patent EP2679805(B1) relates to a wind turbine whose blades comprise a surface at their root, which is perpendicular to the longitudinal axis of the blade, and holes at its root which are parallel to said longitudinal axis and which also traverse the bearing. In order to obtain an additional coning angle, an insert is used, placed between the root of the blade and the blade bearing. As may be seen, in figures 2 and 3 in particular, a number of studs, housed in the holes for the joining of the blade to the bearing, traversing the insert, are fixed at the forward side of the bearing with nuts. Figures 2 and 3 also depict how the fixing of the nuts at the forward side of the bearing causes an unequal distribution of stresses, as the nuts are not completely seated on the forward side.

Finally, figures 4 and 5 of the aforementioned patent EP2679805(B1) show alternative embodiments wherein the insert features at its rearward part, closer to the blade, a number of respectively external and internal recesses, defining fixing surfaces which are perpendicular to the bolts. This presents various drawbacks; firstly, the need to add an insert in order to achieve an additional coning angle; secondly, two rows of bolts are required, one row to attach the insert to the blade, and another row to attach the insert to the bearing, this entailing firstly, logistical and assembly issues, and secondly, the need to gain access to locations with limited access.

Frydendal's US patent application US20120213638A1 discloses a method of moulding a wind-turbine blade in a mould. The method includes arranging a number of markers on an interior of the mould; arranging a composite layup in the mould; and assembling and curing the composite layup in the mould such that a negative impression of a marker is formed on a surface of the composite layup, which negative impression facilitates correct positioning of the blade relative to a component in a subsequent assembly step. A wind-turbine blade moulded using such a mould is also disclosed. A coning angle is subtended between the longitudinal axis of the blade and a direction normal to the root of the blade. The root also features holes for attaching the blade to a pitch bearing.

GLASFIBER's US patent application US20100291912A1 discloses a wind turbine blade with at least two connection members, such as bushings and/or threaded bars in the root of the blade, for attaching the blade to a hub. The connection members are placed along the blade surface and at least some of the connection members are non-parallel and hence oriented in different directions, so as shorten the root section of the blade and move closer to the hub the maximum chord of the wind turbine. It further relates to a pitch bearing and a hub comprising a bearing wing with two or more holes for positioning fastening members for attaching a wind turbine blade to the bearing. Here, correspondingly, at least two of the holes are oriented in different angles so that the fastening members positioned in the holes are non-parallel and extend in different direction.

ACCIONA WINDPOWER's European patent application EP2886858A1 relates to a wind turbine with blade pitch system with an angle between the longitudinal direction of the blade and axis of rotation of the bearing of the blade pitch system, disposing the driving plate of the blade pitch system between the blade and the bearing of the blade pitch system.

Furthermore, US 2011020131 A1 (VESTAS) discloses a wind turbine blade comprising a coning angle.

### DESCRIPTION OF THE INVENTION

The present invention describes a wind turbine which incorporates in its blades an additional coning angle of such a type which provides a uniform distribution of stresses at the joint between blade and bearing, and which further enables a correct seat for the fixing means.

The wind turbine of the invention comprises a blade comprising a joining area incorporating a first surface whose normal direction forms an angle different from 0º with the longitudinal axis of the blade. The wind turbine further incorporates a hub, as well as a bearing to perform a change of pitch of the blade.

The bearing is formed by: a stationary ring attached to the hub, and a mobile ring, comprising a rear side and a front side opposite to the rear side, whereby the mobile ring is connected to the joining area of the blade through the rear side of the ring and the first surface of the joining area respectively.

The blade further comprises, at the joining area, first holes; the wind turbine also further comprising a number of longitudinal attaching means which are housed in the first holes and which traverse the bearing through second through-holes, to attach the blade to the mobile ring of the bearing.

Likewise, the wind turbine further comprises: at least one fixing surface, located in the area of the front side of the mobile ring of the bearing, and a number of fixing means, which rest against the at least one fixing surface, to fix the attaching means. The "area of the front side of the bearing" is understood to be the area projecting from the front side of the bearing, said side included, towards the interior of the hub.

Furthermore, the second through-holes are perpendicular to the first surface of the blade and the second through-holes feature dimensions greater than those of the first holes.

By means of the solution described, an additional blade coning angle is achieved in a constructively simple way, and enabling a balanced distribution of stresses at the joint between the blade and the bearing, as the attaching means are centred on the wall of the blade and the fixing means rest totally against the fixing surfaces.

### DESCRIPTION OF THE DRAWINGS

As a supplement to the description made herein, and for the purpose of aiding to the better understanding of the characteristics of the invention, in accordance with a number of examples of practical embodiments of the same, a set of drawings is attached as an integral part of said description wherein, by way of illustration and not limitation, the following is shown:
Figure 1 shows a wind turbine of the state of the art, depicting the tilt angle (T) and the coning angle (C).
Figure 2 shows a wind turbine of the state of the art, depicting the additional coning angle (P) and a schematic representation of a kinematic chain for the changing of the blade pitch angle.
Figure 3 shows a preferred embodiment of the invention.
Figure 4 shows an explanatory view of the obtaining of a blade in accordance with the embodiment shown in figure 3.
Figure 5 shows an alternative embodiment of the invention to that in figure 3.
Figure 6 illustrates an alternative embodiment of the invention to those in figures 3 and 5.

### PREFERRED EMBODIMENT OF THE INVENTION

With the aid of the aforementioned figures 1-6, a detailed description of a series of examples of preferred embodiments of a wind turbine whose blades feature a coning angle in accordance with the present invention is provided below.

The wind turbine, which is preferably a wind turbine with an upwind rotor, features in a manner which is common to all of the examples to be described below and as is known in the state of the art, at least one blade (2), a hub (3) and a blade (2) pitch change bearing (4). The blade (2) comprises a longitudinal axis (5) and further comprises a tip (6) at one end, and a joining area (7), also known as the root, at an end opposite to the tip (6).

The joining area (7) comprises a first surface (8) by which the blade (2) is attached to the bearing (4), as will be explained below. The first surface (8) is oriented in such a way that its normal direction forms an angle different from 0º with the longitudinal axis (5) of the blade (2). In the attached figures, the blade (2) is shown to be bevelled, defining the first surface (8).

In turn, the bearing (4) comprises a stationary ring (9), attached to the hub (3), and a mobile ring (10), which in turn includes a rear side (11) and a front side (12) opposite the rear side (11). The mobile ring (10) is attached to the blade (2) via the rear side (11) of the mobile ring (10) and the first surface (8) of the joining area (7) of the blade (2) respectively, as it has been mentioned above. Generally, as portrayed in the figures, the first surface (8) is in contact with the rear side (11), although solutions are also common wherein an intermediate part, such as a reinforcing plate (not portrayed) is placed between the first surface (8) and the rearward side (11).

To execute the aforementioned joint between the blade (2) and the bearing (4), the blade (2) features at the joining area (7) and extending from the first surface (8) a plurality of first holes (13), such as for instance first drills, which are parallel to the longitudinal axis (5) of the blade (2). A number of longitudinal attaching means (14), such as studs, are housed in the first holes (13) in such a way that they protrude from said first holes (13) and traverse the bearing (4) through second holes (17) drilled in the bearing (4), surpassing the front side (12).

The additional provision of at least one fixing surface (15, 23, 24) is foreseen on the area of the front side (12) of the bearing (4).

In collaboration with the at least one fixing surface (15, 23, 24), fixing means (16) are also arranged, such as nuts if for example the attachment means (14) are studs, where the fixing means (16) rest against the at least one fixing surface (15, 23, 24) to fix the attaching means (14), where each of the at least one fixing surfaces (15, 23, 24) is perpendicular to its corresponding attaching means (14).

As the first surface (8) of the blade (2) is not perpendicular to the longitudinal axis (5) of the blade (2), while the first holes (13) are parallel to said longitudinal axis (5), the attachment of the blade (2) to the bearing (4) defines a non-null additional coning angle (P).

As it has been mentioned above, the bearing (4) comprises second through-holes (17) between the rear side (11) and the front side (12) of the mobile ring (10) in correspondence with the first holes (13) for housing the attaching means (14).

According to the invention, the second through-holes (17) are perpendicular to the first surface (8), and have dimensions, such as their diameter when applicable, greater than those of the first holes (13). Said condition enables the passage, through the bearing (4), of the attaching means (14), which are oriented in accordance with the direction of the longitudinal axis (5) of the blade (2), while the first surface (8) is not perpendicular to said longitudinal axis (5).

In order to simplify the logistics and the assembly operations, the use of attaching means (14) of equal length is preferred; this will be explained in detail below in the preferred embodiments provided.

As a supplement to the description made herein, a variety of particular examples of the wind turbine with an additional coning angle (P) of the present invention are detailed below.

### EXAMPLE 1: INTERMEDIATE ELEMENT

In a first example of a preferred embodiment to be described below, the wind turbine further comprises an intermediate element (19, 20) between the bearing (4) and the fixing means (16), where the fixing surfaces (15, 23, 24) are located on said intermediate element (19, 20). Specifically, the intermediate element (19, 20) comprises a first side (21) connected to the front side (12) of the mobile ring (10) of the bearing (4), and a second side (22) opposite to the first side (21) whereon the fixing surfaces (15, 23, 24) are located.

Two embodiments of the intermediate element (19, 20) in example 1, and considered more preferable, are described below.

In accordance with a first embodiment of example 1, the second side (22) of the intermediate element (19, 20) forms with its first side (21) an angle of the same value as the angle forming the normal direction to the first surface (8) of the blade (2) with the longitudinal axis (5) of the blade (2), for example, the intermediate element (19, 29) could be a cylindrical wedge defined by non-parallel planes.

In the case described, the second side (22) is perpendicular to the attaching means (14), the fixing surfaces (15, 23, 24) being first fixing surfaces (15), forming part of the second side (22).

Consequently, as may be seen in figure 3, in order to enable that the attaching means (14) have the same length, preferably the first holes (13) shall be of different lengths, in such a way that said first holes (13) end at points which together define a plane (II) substantially perpendicular to the longitudinal axis (5) of the blade (2), and therefore oblique to the first surface (8) of the blade (2). In this way, the equal length of all the attaching means (14) is achieved, therefore all protruding equally from the first fixing surface (15).

As portrayed in figures 3 and 4, the intermediate element (19, 20) is a first intermediate element (19) obtained preferably by cutting it directly from the joining area (7) of the blade (2). Thus, a section of the joining area (7) is trimmed, providing a blade (2) comprising a joining area (7) featuring a bevelled first surface (8), as is required, and where the cut part also forms the first intermediate element (19), which may subsequently be installed on the forward side (12) of the mobile ring (10) of the bearing (4).

By way of an example, as shown in figure 4, the joining area (7) of the blade (2) is cut, defining an end surface (28) which is perpendicular to the longitudinal axis (5) of said blade (2), and the first holes (13) are executed. Next, the joining area (7) of the blade (2) is cut once again, this time obliquely, that is, not perpendicularly to the longitudinal axis (5) of the blade (2), obtaining the section, which is finally assembled in the area of the front side (12) of the mobile ring (10) of the bearing (4), preferably in contact with said front side (12).

As an alternative to the first embodiment described above, in another embodiment the at least one fixing surface (15, 23, 24) forms with the second side (22) of the intermediate element (20) an angle substantially equal to that forming the normal direction to the first surface (8) of the blade (2) with the longitudinal axis (5) of the blade (2).

An embodiment wherein the wind turbine further comprises a pitch plate (25), also known as a driving plate, will be described below with the aid of figure 2.

As it has been mentioned above, the bearing (4) is used to execute a change in the blade (2) pitch angle; also that said bearing (4) is attached, by means of its stationary ring (9), to the hub (3), and by its mobile ring (10) to both the blade (2) at its rear side (11), and by its front side (12) to the pitch plate (25), generally located toward the interior of the hub (3).

The pitch plate (25) performs a structural function, that of reinforcing the hub (3) in order to help to stand the loads induced by the wind (2). In certain cases, as will be explained below, the pitch plate (25) additionally or alternatively fulfils a kinematic function, as it constitutes a link in a kinematic chain which drives the pitch system of the blade (2). Specifically, an actuator (26) is foreseen, which may be for example hydraulic or electrical, and which is attached to the hub (3) to perform the rotation of the mobile ring (10) of the bearing (4) and thus change the pitch angle of the blade (2). When the actuator (26) is of a hydraulic type, said actuator (26) acts upon the pitch plate (25) via a balljoint mechanism (29), causing the turning of said pitch plate (25), which is transmitted to the bearing (4).

In the event of the actuator (26) being electrical, the pitch plate (25) is not normally necessary for changing the pitch angle of the blade (2), but said pitch plate (25) may be included anyway, to fulfil the aforementioned structural function.

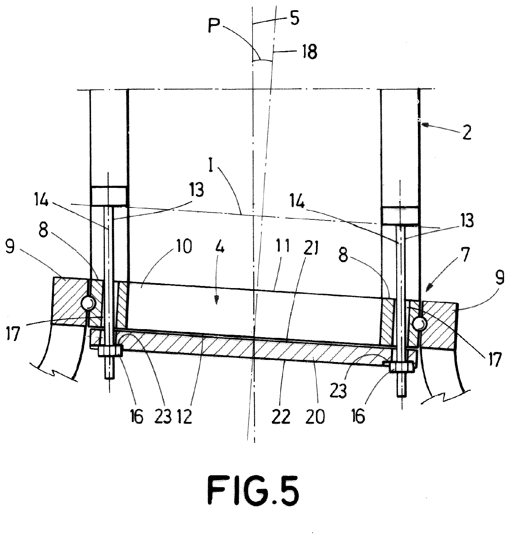

When a pitch plate (25) is included, the intermediate element (19, 20) may be, as depicted in figure 5, a second intermediate element (20) coinciding with the pitch plate (25), in such a way that the fixing surfaces (15, 23, 24) are second fixing surfaces (23) generated on the second side (22) of the second intermediate element (20).

In this embodiment, and preferably, the first holes (13) essentially feature the same length, as portrayed in figure 5. Consequently, as the first holes (13) start at the first surface (8), which is oblique to the longitudinal axis (5) of the blade (2), said first holes (13) end at points which together define a plane (I) substantially parallel to said first surface (8) and therefore oblique to the longitudinal axis (5) of the blade (2). In this way, the equal length of all the attaching means (14) is achieved, therefore all protruding equally from the fixing surface.

### EXAMPLE 2: MOBILE RING OF THE BEARING

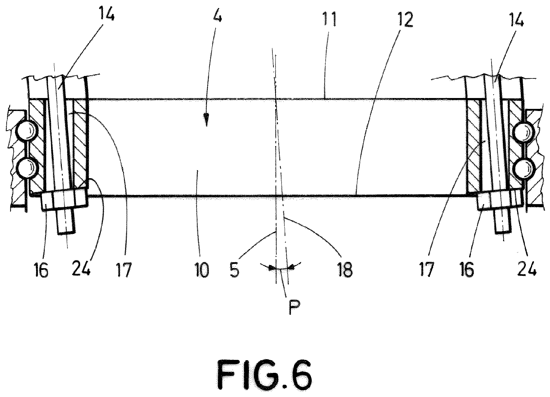

In accordance with a second example, the fixing surfaces (15, 23, 24) are third fixing surfaces (24) located on the front side (12) of the mobile ring (10) of the bearing (4), as may be seen in figure 6.

Preferably, in this example the first holes (13) are also essentially of the same length, so that the attaching means (14) may be of the same length and protrude equally from the fixing surface (15, 23, 24).

## Claims

1. A wind turbine which comprises:
- at least one blade (2), which in turn comprises: a longitudinal axis (5), and a joining area (7) comprising a first surface (8) whose normal direction forms with the longitudinal axis (5) a coning angle different from 0º;
- a hub (3); and
- a bearing (4), which comprises: a stationary ring (9) attached to the hub (3), and a mobile ring (10) comprising a rear side (11) attached to the first surface (8) of the joining area (7) of the blade (2), and a front side (12) opposite the rear side;
the blade (2) further comprising, at the joining area (7), first holes (13); the wind turbine further comprising:
- a number of longitudinal attaching means (14), housed in the first holes (13), and which traverse the bearing (4) through a number of second through-holes (17), surpassing the front side (12) to attach the blade (2) to the mobile ring (10) of the bearing (4);
- at least one fixing surface (15, 23, 24) located in the area of the front side (12) of the mobile ring (10) of the bearing (4); and
- fixing means (16) which rest against at least one fixing surface (15, 23, 24) to fix the attaching means (14);
wherein the first holes (13) of the blade (2) are parallel to the longitudinal axis of the blade (2), and wherein the at least one fixing surface (15, 23, 24) is perpendicular to the attaching means (14);
and **characterised in that** the second through-holes (17) are perpendicular to the first surface (8) of the blade (2) and the second through-holes (17) feature dimensions greater than those of the first holes (13).

2. A wind turbine, as claimed in claim 1, **characterised in that** it further comprises an intermediate element (19, 20) between the bearing (4) and the fixing means (16), said intermediate element (19, 20) featuring:
- a first side (21) connected to the front side (12) of the mobile ring (10) of the bearing (4), and
- a second side (22), opposite the first side (21), and which comprises at least two of the fixing surfaces (15, 23, 24).

3. A wind turbine, as claimed in claim 2, **characterised in that** the second side (22) of the intermediate element (19, 20) forms with the first side (21) an angle of the same value as the non-null coning angle formed by the normal direction to the first surface (8) of the blade (2) with the longitudinal axis (5) of the blade (2).

4. A wind turbine, as claimed in claim 3, **characterised in that** the ends of the first holes (13) of the blade (2), opposite the first surface (8) of the blade (2) joining area, define a plane (II) forming with the first surface (8) an angle equal to the non-null coning angle formed by the normal direction to the first surface (8) of the blade (2) with the longitudinal axis (5) of the blade (2).

5. A wind turbine, as claimed in claim 2, **characterised in that** the at least two fixing surfaces (15, 23, 24) form with the second side (22) of the intermediate element (20) an angle substantially equal to the non-null coning angle formed by the normal direction to the first surface (8) of the blade (2) with the longitudinal axis (5) of the blade (2).

6. A wind turbine, as claimed in claim 5, **characterised in that** the first holes (13) are substantially of the same length.

7. A wind turbine, as claimed in any one of claims 2-6, **characterised in that** the intermediate element (19, 20) is a second intermediate element (20) which comprises a pitch plate (25).

8. A wind turbine, as claimed in claim 1, **characterised in that** the at least one fixing surface (15, 23, 24) is comprised at the front side (12) of the mobile ring (10) of the bearing (4).

9. A wind turbine, as claimed in claim 1, **characterized in that** the first surface (8) is in contact with the rear side (11).

## Patentansprüche

1. Windkraftanlage, die Folgendes umfasst:
- mindestens eine Schaufel (2), die wiederum umfasst: eine Längsachse (5) und einen Verbindungsbereich (7), umfassend eine erste Oberfläche (8), deren Normalenrichtung mit der Längsachse (5) einen von 0º verschiedenen Kegelwinkel bildet;
- eine Nabe (3); und
- ein Lager (4), das umfasst: einen stationären Ring (9), der an der Nabe (3) angebracht ist, und einen beweglichen Ring (10), der eine Rückseite (11) umfasst, die an der ersten Oberfläche (8) des Verbindungsbereichs (7) der Schaufel (2) angebracht ist; und eine der Rückseite gegenüberliegende Vorderseite (12);
wobei die Schaufel (2) ferner umfasst, am Verbindungsbereich (7), erste Löcher (13);
wobei die Windkraftanlage ferner umfasst:
- eine Anzahl von längsverlaufenden Anbringungsmitteln (14), die in den ersten Löchern (13) untergebracht sind und die das Lager (4) durch eine Anzahl von zweiten Durchgangslöchern (17) durchquert, welche die Vorderseite (12) überschreiten, um die Schaufel (2) am beweglichen Ring (10) des Lagers (4) anzubringen;
- mindestens eine Befestigungsoberfläche (15, 23, 24), die sich in dem Bereich der Vorderseite (12) des mobilen Rings (10) des Lagers (4) befindet; und
- Befestigungsmittel (16), die an mindestens einer Befestigungsoberfläche (15, 23, 24) anliegen, um die Anbringungsmittel (14) zu befestigen;
wobei die ersten Löcher (13) der Klinge (2) parallel zur Längsachse der Klinge (2) sind und wobei die mindestens eine Befestigungsoberfläche (15, 23, 24) senkrecht zu den Anbringungsmitteln (14) verläuft;
und **dadurch gekennzeichnet, dass** die zweiten Durchgangslöcher senkrecht zur ersten Oberfläche (8) der Schaufel (2) sind und die zweiten Durchgangslöcher (17) Abmessungen aufweisen, die größer sind als die der ersten Löcher (13).

2. Windkraftanlage nach Anspruch 1, **dadurch gekennzeichnet, dass** diese ferner ein Zwischenelement (19, 20) zwischen dem Lager (4) und den Befestigungsmitteln (16) umfasst, wobei das Zwischenelement (19, 20) aufweist:
- eine erste Seite (21), die mit der Vorderseite (12) des beweglichen Rings (10) des Lagers (4) verbunden ist, und
- eine zweite Seite (22), gegenüber der ersten Seite (21), und die mindestens zwei der Befestigungsoberflächen (15, 23, 24) umfasst.

3. Windkraftanlage nach Anspruch 2, **dadurch gekennzeichnet, dass** die zweite Seite (22) des Zwischenelements (19, 20) mit der ersten Seite (21) einen Winkel bildet, der den gleichen Wert hat wie der Nicht-Null-Kegelwinkel, der durch die Normalenrichtung zur ersten Oberfläche (8) der Schaufel (2) mit der Längsachse (5) der Schaufel (2) gebildet wird.

4. Windkraftanlage nach Anspruch 3, **dadurch gekennzeichnet, dass** die Enden der ersten Löcher (13) der Schaufel (2) gegenüber der ersten Oberfläche (8) des Schaufel (2)-Verbindungsbereichs eine Ebene (II) mit der ersten Oberfläche (8) einen Winkel bilden, der gleich dem Nicht-Null-Kegelwinkel ist, der durch die Normalenrichtung zur ersten Oberfläche (8) der Schaufel (2) mit der Längsachse (5) der Schaufel (2) gebildet wird.

5. Windkraftanlage nach Anspruch 2, **dadurch gekennzeichnet, dass** die mindestens zwei Befestigungsoberflächen (15, 23, 24) mit der zweiten Seite (22) des Zwischenelements (20) einen Winkel bilden, der im Wesentlichen gleich dem Nicht-Null-Kegelwinkel, der von der Normalenrichtung zur ersten Oberfläche (8) der Schaufel (2) gebildet wird, mit der Längsachse (5) der Schaufel (2) ist.

6. Windkraftanlage nach Anspruch 5, **dadurch gekennzeichnet, dass** die ersten Löcher (13) im Wesentlichen die gleiche Länge aufweisen.

7. Windkraftanlage nach einem der Ansprüche 2 bis 6, **dadurch gekennzeichnet, dass** das Zwischenelement (19, 20) ein zweites Zwischenelement (20) ist, das eine Achsabstandsplatte (25) umfasst.

8. Windkraftanlage nach Anspruch 1, **dadurch gekennzeichnet, dass** die mindestens eine Befestigungsoberfläche (15, 23, 24) an der Vorderseite (12) des mobilen Rings (10) von dem Lager (4) umfasst ist.

9. Windkraftanlage nach Anspruch 1, **dadurch gekennzeichnet, dass** die erste Oberfläche (8) die Rückseite (11) berührt.

## Revendications

1. Éolienne qui comprend :
- au moins une pale (2), qui comprend à son tour : un axe longitudinal (5), et une zone de jonction (7) comprenant une première surface (8) dont la direction normale forme avec l'axe longitudinal (5) un angle de conicité différent de 0º ;
- un moyeu (3) ; et
- un palier (4), qui comprend : une bague stationnaire (9) reliée au moyeu (3), et une bague mobile (10) comprenant un côté arrière (11) relié à la première surface (8) de la zone de jonction (7) de la pale (2), et un côté avant (12) opposé au côté arrière ;
la pale (2) comprenant en outre, au niveau de la zone de jonction (7), des premiers trous (13) ;
l'éolienne comprenant en outre :
- un certain nombre de moyens de liaison longitudinaux (14), logés dans les premiers trous (13), et qui traversent le palier (4) à travers un certain nombre de deuxièmes trous traversants (17), dépassant le côté avant (12) pour relier la pale (2) à la bague mobile (10) du palier (4) ;
- au moins une surface de fixation (15, 23, 24) située dans la zone du côté avant (12) de la bague mobile (10) du palier (4) ; et
- des moyens de fixation (16) qui s'appuient contre au moins une surface de fixation (15, 23, 24) pour fixer les moyens de liaison (14) ;
dans laquelle les premiers trous (13) de la pale (2) sont parallèles à l'axe longitudinal de la pale (2), et dans laquelle l'au moins une surface de fixation (15, 23, 24) est perpendiculaire aux moyens de liaison (14) ;
et **caractérisée en ce que** les deuxièmes trous traversants sont perpendiculaires à la première surface (8) de la pale (2) et les deuxièmes trous traversants (17) présentent des dimensions supérieures à celles des premiers trous (13).

2. Éolienne, telle que revendiquée dans la revendication 1, **caractérisée en ce qu'**elle comprend en outre un élément intermédiaire (19, 20) entre le palier (4) et les moyens de fixation (16), ledit élément intermédiaire (19, 20) présentant :
- un premier côté (21) raccordé au côté avant (12) de la bague mobile (10) du palier (4), et
- un deuxième côté (22), à l'opposé du premier côté (21), et qui comprend au moins deux des surfaces de fixation (15, 23, 24).

3. Éolienne, telle que revendiquée dans la revendication 2, **caractérisée en ce que** le deuxième côté (22) de l'élément intermédiaire (19, 20) forme avec le premier côté (21) un angle de la même valeur que l'angle de conicité non nul formé par la direction normale à la première surface (8) de la pale (2) avec l'axe longitudinal (5) de la pale (2).

4. Éolienne, telle que revendiquée dans la revendication 3, **caractérisée en ce que** les extrémités des premiers trous (13) de la pale (2), à l'opposé de la première surface (8) de la zone de jonction de la pale (2), définissent un plan (II) formant avec la première surface (8) un angle égal à l'angle de conicité non nul formé par la direction normale à la première surface (8) de la pale (2) avec l'axe longitudinal (5) de la pale (2).

5. Éolienne, telle que revendiquée dans la revendication 2, **caractérisée en ce que** les au moins deux surfaces de fixation (15, 23, 24) forment avec le deuxième côté (22) de l'élément intermédiaire (20) un angle sensiblement égal à l'angle de conicité non nul formé par la direction normale à la première surface (8) de la pale (2) avec l'axe longitudinal (5) de la pale (2).

6. Éolienne, telle que revendiquée dans la revendication 5, **caractérisée en ce que** les premiers trous (13) ont sensiblement la même longueur.

7. Éolienne, selon l'une quelconque des revendications 2 à 6, **caractérisée en ce que** l'élément intermédiaire (19, 20) est un deuxième élément intermédiaire (20) qui comprend une plaque de tangage (25).

8. Éolienne, telle que revendiquée dans la revendication 1, **caractérisée en ce que** l'au moins une surface de fixation (15, 23, 24) est constituée du côté avant (12) de la bague mobile (10) du palier (4).

9. Éolienne, telle que revendiquée dans la revendication 1, **caractérisée en ce que** la première surface (8) est en contact avec le côté arrière (11).
